# EUROPEAN PATENT APPLICATION

(11) **EP 1 671 775 A1**
(43) Date of publication of application: **21.06.2006**
(21) Application number: 05112392.5
(22) Date of filing: 19.12.2005
(51) Int. Cl.: B29C 45/14, A42B 3/06

(54) **Method to produce a protective helmet and protective helmet thus produced**

(30) Priority: 20.12.2004 IT UD20040233
(71) Applicant: SCAME Srl, 24040 Suisio BG (IT)
(72) Inventor: Musitelli, Andrea, 24030, BREMBATE DI SOPRA (BG) (IT)
(74) Representative: Petraz, Davide Luigi

(57) **Abstract**

Method to produce a protective helmet (11) comprising a body (13) made of plastic material, of the type used in injection molding, and having an outer surface decorated with at least an image (12) made from a digital image and associated with the body (13) during the injection molding step.

## Description

### FIELD OF THE INVENTION

The present invention concerns a method to produce a protective helmet, both of the sporting type, for activities such as motorcycling, motor-racing, cycling, skiing, mountain climbing or other sport, and also of the accident-prevention type, used, sometimes even obligatorily, to increase safety in certain workplaces.

The method according to the present invention allows, even the user himself, to personalize the outer surface of the helmet with images or writing, starting from a digital-type image.

### BACKGROUND OF THE INVENTION

It is known to produce protective helmets, both of the sporting type and also of the accident-prevention type, made of plastic material by means of injection molding, which are decorated on the outside, especially the sporting type, with writing or images of various types.

Each image, decoration or writing is normally printed in advance on a thin adhesive strip of paper or transparent plastic material, which is then made manually to adhere to the already molded neutral helmet.

The method to acquire the image is very laborious, however, it requires a lot of time and is very expensive. Moreover, the decorations and writings are exposed to possible deterioration caused by abrasion and wear.

It is also known to decorate a single helmet at a time, especially when it is used by a racing driver, of cars or motorcycles. In this case, the personalized images are made manually on an already molded neutral helmet, also using transfer printing, spray painting and the paint gun decoration technique.

One purpose of the present invention is to perfect a simple, quick and economical method that will allow to produce a protective helmet having a personalized image, which can also be chosen by the user himself, protected from scratches and possible deterioration.

The Applicant has devised, tested and embodied the present invention to overcome the shortcomings of the state of the art and to obtain these and other purposes and advantages.

### SUMMARY OF THE INVENTION

The present invention is set forth and characterized in the main claims, while the dependent claims describe other characteristics of the invention or variants to the main inventive idea.

In accordance with this purpose, a method according to the present invention is used to produce a protective helmet, both of the sporting type and also of the accident-prevention type, comprising a body made of plastic material having the outer surface decorated with at least a personalized image.

According to a characteristic of the present invention, the method to produce the protective helmet comprises, in sequence, at least the following steps:
- a first step of acquiring and/or processing a digital image;
- a second step of printing the digital image on a flexible support, by means of digital printing means;
- a third step of shaping the flexible support, so that it assumes a form mating with the outer surface of the helmet to be made;
- a fourth step of positioning the flexible support in a mold for injection molding, defining the form of the helmet to be made; and
- a fifth step of producing the helmet by means of injecting molten plastic material at a determinate pressure inside the mold.

During the fifth step, the plastic material injected is left to polymerize and then solidify inside the mold, thus making the helmet, with the flexible support which defines the outer surface thereof.

In the first step, the digital image can be acquired in any known manner, for example, by scanning a drawing, a photograph or other. The digital image can also be processed following the indications of the user or purchaser of the helmet, for example using graphic programs for calculators, such as two-dimensional or three-dimensional CAD programs.

According to another characteristic of the method according to the present invention, the flexible support comprises at least a layer of transparent plastic material, for example polycarbonate, and has a thickness in the order of tenths of a millimeter.

According to another characteristic of the method according to the present invention, the second step advantageously uses an ink resistant to a temperature of more than 150°C, and to chafing, both induced during the production step by the sliding of the molten plastic material injected into the mold on the flexible support disposed in the mold during the fourth positioning step.

According to a variant, the method according to the invention comprises, between the third and fourth step, an additional finishing step for said flexible support, so as to eliminate from the flexible support the excess parts, which would overflow from the outer surface of the helmet.

The helmet made using the method according to the present invention comprises a body made with a thermoplastic material of the type used for injection molding and on the outer surface of which a thin transparent flexible support is co-molded, previously decorated on the outer side, in contact with the thermoplastic material, with a personalized print, taken from a digital image.

By means of the method according to the present invention, it is possible to produce protective helmets in a simple, precise and economical manner, both on the individual level, and also for serial production, each provided with a personalized image and with a decoration protected from possible deterioration, since it is positioned on the inner side of the transparent flexible support.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a flow chart describing the method according to the present invention;
- fig. 2 is a lateral view of a helmet made using the method according to the present invention.

### DETAILED DESCRIPTION OF A PREFERENTIAL FORM OF EMBODIMENT

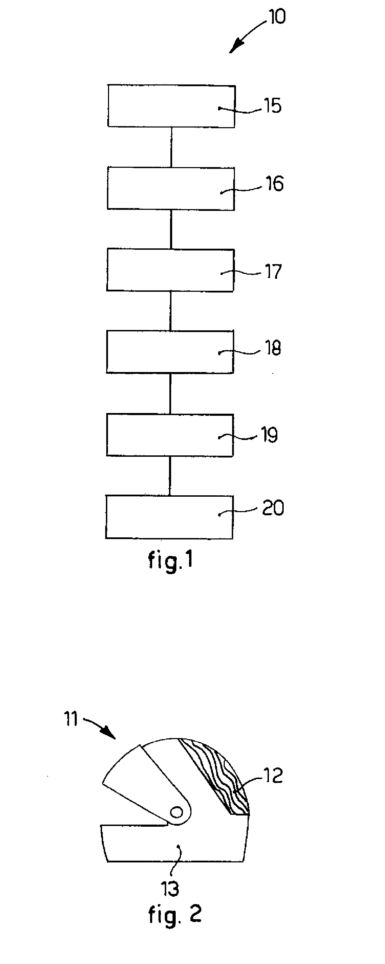

With reference to fig. 1, a method 10 according to the present invention allows to produce, using the injection molding technique, a protective helmet 11 (fig. 2), in this case of the sporting type, comprising a body 13 made of plastic material and having the outer surface decorated with a determinate image 12.

The method 10 (fig. 1) comprises in sequence a first step 15, during which a digital image is acquired, and possibly processed, by means of known electronic means, such as a digital camera, or a digital micro-camera, associated with an electronic calculator.

Moreover, the image can also be acquired, or formed, directly on a calculator with a suitable program for processing images.

After the first step 15 follows a second step 16, during which the digital image is printed onto a flexible support, which can be for example a film of plastic material having a thickness of between about 0.1 and 0.5 mm.

The film can be formed by a single layer, for example of polycarbonate, or by a mixture consisting of polycarbonate and a plurality of thermoplastic resins such as, for example, the PC-PBT resins, so as to improve the elasticity of the polycarbonate and its chemical resistance.

According to a variant, the flexible support comprises an outer layer, made with polycarbonate that is chemically modified in order to obtain a material resistant to ultraviolet rays and with anti-scratch characteristics, and an inner layer, made of a material compatible with the inks or with the material to be printed over, such as for example thermoplastic polyurethane.

There then follows a third step 17, during which the flexible support, already printed, is shaped so as to assume a form mating with the inner wall of a mold, defining the form of the helmet 11 and consequently the outer surface of the helmet 11.

Optionally, the flexible support is also finished in an additional finishing step 18.

In a subsequent fourth step 19, the flexible support is positioned in the mold.

Finally, in a fifth step 20 the helmet 11 is made by injecting molten plastic material, for example a thermoplastic resin, at a pressure comprised between 80 Mpa and 150 Mpa. inside the mold, on an inner wall of which the pre-formed flexible support is disposed.

The solidification of the plastic material injected into the mold thus defines the form of the helmet 12, and the flexible support which adheres to its outer surface confers a personalized aesthetic appearance.

Said first step 15 of acquiring and/or processing the digital image can be advantageously performed even by the user or purchaser of the helmet 11, so that the digital image can be chosen and modified as desired and also personalized as desired.

For example, the acquisition of the digital image can be effected by scanning an image, a drawing or a photograph, available in paper form, or by photographing or filming an object, a view, a person or other, by means of a digital camera or micro-camera.

The digital image may then be processed, following the indications of the user or purchaser, using any computerized graphics program, of a known type, such as for example the 2D and 3D CAD programs.

The digital image is processed taking into account the distortion to which the flexible support is subjected in the third shaping step 17, so that, at the end of the third step 17, the image 12 reproduced on the flexible support is actually the one desired by the user or purchaser.

The second printing step 16 is performed for example by printing onto the flexible support, disposed on a plane, the chosen digital image by means of the digital printing technique, using for example off-set type plants, laser or ink-jet printers, controlled by an electronic calculator.

To print the digital image, it is necessary to use an ink that is resistant both to a relatively high temperature, more than 150°C, and also to chafing, which are induced during the fifth step 20 by the sliding of the molten plastic material inside the mold, against the flexible support.

Moreover, the ink used must be compatible with the material that is to be printed on, and must be sufficiently elastic, so as to prevent the formation of cracks, wrinkles or deformations in the image 12 during the third step 17.

During the third step 17, the flexible support on which the digital image has previously been printed, is subjected in this case to a process of mechanical forming by means of pressing. This process provides to heat both the flexible support and also a corresponding mold, shaped according to the outer surface of the helmet 11, to a temperature less than the glass transition temperature of the material of which the flexible support is made. Afterwards, a shaped punch presses the flexible support against the matrix of the mold and holds it pressed for about 15-20 seconds.

During this process, the flexible support is protected with a film disposed between the flexible support and the punch of the mold, so as to prevent the formation of scratches or scores on the surface of the flexible support. Possibly, a second protective film may also be disposed between the flexible support and the matrix of the mold.

According to a first variant, the third step 17 may be performed by subjecting the flexible support to hydroforming. In this process, the flexible support previously taken to the glass transition temperature, is pressed against a matrix by means of a liquid, separated from the flexible support by a silicon membrane.

According to another variant, the third step 17 can be performed by subjecting the flexible support to high pressure forming, in which a compressed gas exerts on the flexible support, positioned on the corresponding matrix, the pressure necessary to hold it pressed against the matrix.

According to another variant, the third step 17 may be performed by subjecting the flexible support to heat forming, during which the flexible support, positioned on the corresponding matrix, is heated and subjected to a slight depression, thus assuming the form of the matrix itself.

In the additional finishing step 18 the parts of the flexible support that, following the third step 17, are in excess with respect to the form of the helmet 11, are removed.

Said parts are removed by means of a punch, or by means of operations such as, for example, laser cutting, water cutting, or milling.

Once finished, the flexible support can be positioned on the mold automatically, for example by means of a manipulator of a known kind, taking into account the position on the mold of the point where the molten plastic material is injected, in order to prevent the latter, once injected, from drawing the flexible support out of position.

The flexible support is kept in the desired position on the mold thanks to its geometry, or the phenomenon of electrostatic adhesion to the inner surface of the mold.

The injections of molten plastic material inside the mold must be done towards the center of the mold and preferably in sequential mode, or must be submarine on an extractor. If a single injection point, or gate, is sufficient, it is necessary to position the injection point appropriately, so as to prevent the formation of wrinkles on the flexible support during injection.

It is clear that modifications and/or additions of parts or steps may be made to the method 10 to produce a protective helmet 11 and the protective helmet 11 as described heretofore, without departing from the field and scope of the present invention.

It is also clear that, although the present invention has been described with reference to some specific examples, a person of skill in the art shall certainly be able to achieve many other equivalent forms of method to produce a protective helmet and protective helmets thus produced, having the characteristics as set forth in the claims and hence all coming within the field of protection defined thereby.

## Claims

1. Method to produce a protective helmet (11) comprising a body (13) made of plastic material, having the outer surface decorated with at least an image (12),
**characterized in that** it comprises, in sequence, at least the following steps:
- a first step (15) of acquiring and/or processing a digital image;
- a second step (16) of printing said digital image on a flexible support, by means of digital printing means;
- a third step (17) of shaping said flexible support, already printed, so that it assumes a form mating with the outer surface of said helmet (11);
- a fourth step (19) of positioning said flexible support, printed and shaped, in a mold for injection molding; and
- a fifth step (20) of producing said helmet (11) by injecting said molten plastic material at a determinate pressure inside said mold.

2. Method as in claim 1, **characterized in that** said flexible support comprises at least a layer of transparent plastic material.

3. Method as in claim 1 or 2, **characterized in that** said flexible support has a thickness in the order of some tenths of a millimeter.

4. Method as in any claim hereinbefore, **characterized in that** in said second step (16) an ink is used that is resistant both to a temperature of more than 150°C, and also to chafing.

5. Method as in any claim hereinbefore, **characterized in that** it also comprises, between said third step (17) and said fourth step (19), an additional step (18) to finish said flexible support, shaped and printed.

6. Protective helmet comprising a body (13) made of plastic material having an outer surface decorated with at least an image (12), **characterized in that** said plastic material is of the type used in injection molding, and **in that** said image (12) is taken from a digital image and is associated with said body (13) during the injection molding step.

7. Protective helmet as in claim 6, **characterized in that** said digital image is impressed on the inner side of a flexible support, co-molded on the outer surface of said body (13) made of plastic material.
